# EUROPEAN PATENT APPLICATION

(11) **EP 2 424 065 A1**
(43) Date of publication of application: **29.02.2012**
(21) Application number: 10290463.8
(22) Date of filing: 31.08.2010
(51) Int. Cl.: H02J 1/10

(54) **Electrical power supply unit and method of operating an electrical power supply unit**

(71) Applicant: Alcatel Lucent, 75007 Paris (FR)
(72) Inventor: Machinal, Robin, 70197 Stuttgart (DE); Schlesinger, Heinz, 74395 Mundelsheim (DE); Bohn, Thomas, 70372 Stuttgart (DE)
(74) Representative: Dreiss

(57) **Abstract**

The invention relates to an electrical power supply unit, PSU, (100) for supplying a load (200) with a variable direct current, DC, voltage, wherein said PSU (100) comprises at least two DC power supply branches (120, 120a, 120b, ..), wherein each of said DC power supply branches (120, 120a, 120b, ..) comprises a DC branch power supply (122) and a diode (124) connecting said DC branch power supply (122) to an output terminal (130) of said PSU (100), wherein at least one of said DC power supply branches (120b, 120c, ..) further comprises a switch (126) that is connected in series to said diode (124) for selectively connecting the DC branch power supply (122) of said at least one DC power supply branch (120b, 120c, ..) with said output terminal (130).

## Description

### Field of the invention

The invention relates to an electrical power supply unit, PSU, for supplying a load with a variable direct current, DC, voltage.

The invention further relates to a method of operating an electrical power supply unit for supplying a load with a variable direct current voltage.

### Background

Especially in the field of supplying power amplifier, PA, modules with electric energy, conventional power supply units are designed to constantly supply the PA modules with a maximum DC supply voltage to account for a maximum signal load of said PA modules. This implies acceptable power efficiency of conventional PA modules at a full signal load. However, in low signal load periods, a reduced power efficiency of the overall system is given.

Accordingly, there is a need to provide a more sophisticated electrical power supply unit and method of operating an electrical power supply unit which enable a supply of electrical power to loads, particularly power amplifiers, with an increased degree of energy efficiency.

### Summary

According to the present invention, regarding the above mentioned electrical power supply unit, this object is achieved by said power supply unit comprising at least two DC power supply branches, wherein each of said DC power supply branches comprises a DC branch power supply and a diode connecting said DC branch power supply to an output terminal of said PSU, wherein at least one of said DC power supply branches further comprises a switch that is connected in series to said diode for selectively connecting the DC branch power supply of said at least one DC power supply branch with said output terminal.

The inventive provisioning of various power supply branches each comprising an own DC branch power supply advantageously enables to provide a variable DC voltage to the load without requiring complex control processes as known from conventional voltage regulators offering variable DC output voltages. In contrast to conventional systems, the DC output voltage of the inventive power supply unit is varied by selectively coupling one or more of said DC power supply branches to the output terminal of the PSU thus providing a respective output voltage of at least one DC branch power supply to the output terminal of the PSU and to the load connected to said PSU. I.e., by respectively controlling the switch of at least one DC power supply branch, the output voltage of the PSU may easily be altered, e.g. be adapted to a current operational state of the load.

A particularly high degree of flexibility regarding the supply with a variable DC voltage is achieved according to an embodiment which proposes that the DC branch power supplies of at least two power supply branches comprise different nominal output voltages. For instance, a first DC branch power supply of a first power supply branch may comprise a nominal output voltage of 15 V (Volt), whereas a second DC branch power supply of a second power supply branch may comprise a nominal output voltage of 20 V. By selectively closing a switch in the respective power supply branch, the output voltage of the power supply unit according to the embodiment may be varied between 15 V and 20 V. In order to increase the number of possible different DC output voltages supplied by the PSU, the number of DC power supply branches comprising DC branch power supplies with different nominal output voltages may be increased.

According to a further embodiment, at least one DC branch power supply is a DC-to-DC converter. For instance, a particularly high energy efficiency of the overall PSU may be achieved by employing buck converters (step down converters).

Alternatively, the DC branch power supplies may also comprise at least one of: an AC (alternating current)-to-DC converter, a battery, or a DC-to-DC converter of the step-up type.

According to a further embodiment, said DC-to-DC converter comprises a tuning circuit for tuning an output voltage of said DC-to-DC converter by influencing an electric potential of a feedback line of said DC-to-DC converter. Thus, an even further increased control of the output voltage of the PSU is enabled, because according to the basic principle of this embodiment, the output voltage may firstly be varied by selectively connecting one or more DC branch power supplies to the output terminal of the PSU. Secondly, employing a tuneable DC-to-DC converter within one or more power supply branches of the PSU enables to fine tune its respective output voltage and thus the output voltage of the PSU. The principle of fine tuning may also be employed with other DC voltage sources such as AC-to-DC converters.

According to a further embodiment, at least one switch used for selectively connecting a DC branch power supply with said output terminal is a semiconductor switch, preferably an N-channel MOSFET (metal oxide semiconductor field effect transistor)-based switch.

According to a further embodiment, said PSU comprises control means configured to control an operation of said PSU, particularly a state of said at least one switch depending on a desired output voltage of said PSU. The control means may e.g. be realized in form of a programmable logic circuit such as a FPGA (field programmable gate array) or a CPLD (complex programmable logic device). Using a microcontroller or digital signal processor (DSP) is also possible, as well as employing discrete logic circuits.

According to a further embodiment, said control means are configured to shift at least one branch power supply to an idle mode and/or a sleep mode in which the branch power supply has a reduced energy consumption as compared to a regular operation. This is particularly beneficial if the specific branch power supply, e.g. a DC-to-DC converter, is currently not used for supplying its output voltage to the output terminal. In this case, the overall energy efficiency of the PSU may advantageously be increased by shifting the branch power supply to an idle mode or a sleep mode. Once the specific branch power supply is required for contributing to the output voltage of the PSU, the control means may shift it from the idle mode and/or the sleep mode to its regular operation. The activation/deactivation of idle/sleep modes may be synchronized with and/or performed depending on controlling the state of the switch of a DC power supply branch.

According to a further embodiment, said control means are configured to tune an output voltage of at least one branch power supply. This may e.g. be performed by controlling a respective tuning circuit that may e.g. influence a feedback loop of a DC-to-DC converter as mentioned above.

According to a further embodiment, said control means are configured to receive information on an operational state (e.g., present state and/or estimated future state) of said load and to control an output voltage of said PSU depending on said operational state of said load, which advantageously enables to achieve a very high degree of energy efficiency since only those components of the PSU according to the embodiment are required to be activated which are necessary for providing the desired output voltage to the load depending on its current operational state. Other components (further DC supply branches and their DC supplies) of the PSU, which are currently not used, may be disconnected from the output via their switches and may further be powered down (idle/sleep mode) temporarily.

The electrical power supply unit according to the embodiments is particularly preferred for being included into radio frequency amplifier systems, more specifically for supplying radio frequency amplifiers with a variable DC voltage. Generally, the PSU may be used for any type of dynamic biasing application, where a variable DC output voltage is required.

A further solution to the object of the present invention is given by a method of operating an electrical power supply unit according to claim 11. The method proposes to selectively connect at least one of said DC branch power supplies with said output terminal by means of a switch that is connected in series to said diode thus enabling an efficient variation of the DC output voltage of the power supply unit.

Further features and advantageous embodiments are given in the dependent claims.

### Brief description of the figures

Further features, aspects and advantages of the present invention are given in following detailed description with reference to the drawings in which:
- Figure 1: depicts a schematic block diagram of a radio frequency amplifier system comprising an electrical power supply unit according to an embodiment,
- Figure 2: depicts a DC power supply branch according to an embodiment,
- Figure 3: depicts an electrical power supply unit according to an embodiment,
- Figure 4: depicts a DC-to-DC converter according to an embodiment,
- Figure 5: depicts a part of a DC power supply branch according to an embodiment, and
- Figure 6: depicts a tuning circuit for tuning an output voltage of a DC-to-DC converter according to an embodiment.

### Description of the embodiments

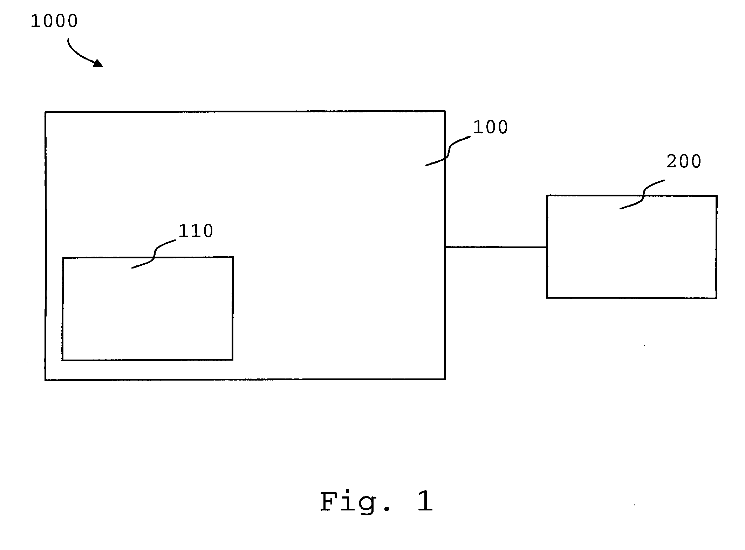

Figure 1 depicts a simplified block diagram of a radio frequency, RF, amplifier system 1000 which comprises an RF amplifier 200 and an electrical power supply unit, PSU, 100 which provides electrical power at variable DC voltage levels to the RF amplifier 200. An operation of the PSU 100 is controlled by the control means 110 in the below explained manner.

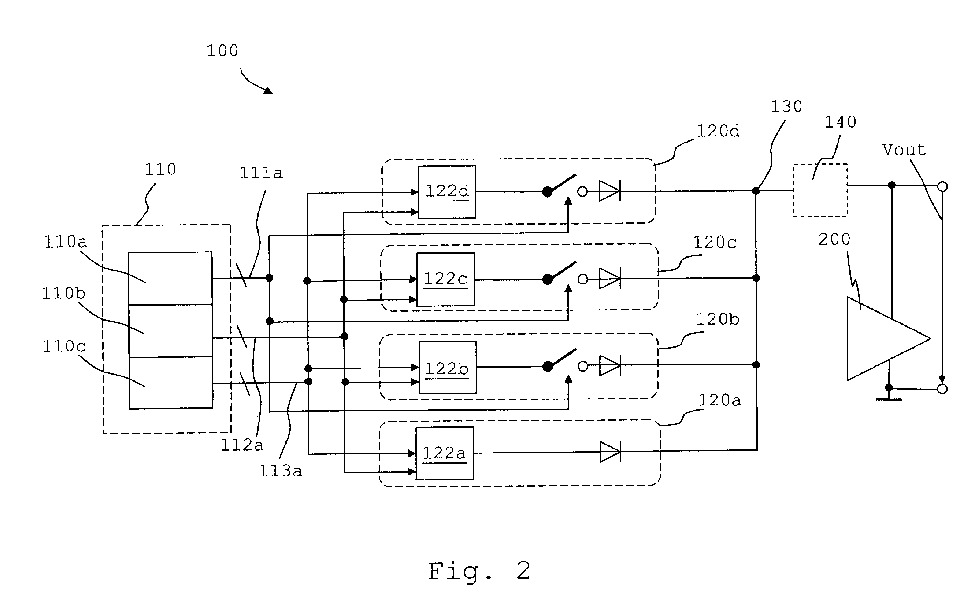

Figure 2 depicts a detailed logical structure of a power supply unit 100 according to an embodiment. The power supply unit 100 comprises four DC power supply branches 120a, 120b, 120c, 120d. Each of the DC power supply branches 120a, 120b, 120c, 120d, or components thereof, respectively, is/are controlled by control means 110 via a plurality of control buses 111a, 112a, 113a. Moreover, each DC power supply branch 120a, 120b, 120c, 120d is connected with its output to a common output terminal 130 of the power supply unit 100. An optional filter arrangement 140 may be provided between the output terminal 130 of the power supply unit 100 and the load 200. The load 200 is supplied with a variable DC voltage Vout by said power supply unit 100. Presently, the load 200 is symbolized as an RF amplifier.

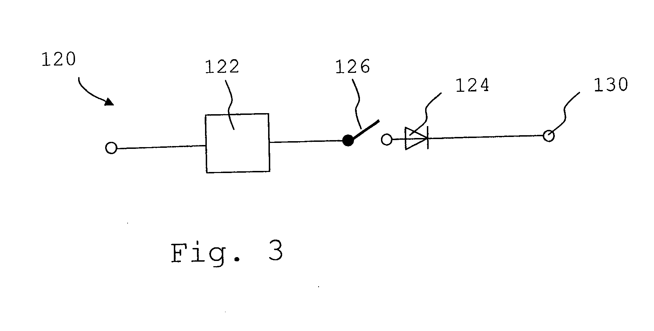

As can be seen from figure 2, each of the DC power supply branches 120a, 120b, .. comprises various components, a general structure of which is presented in figure 3. According to figure 3, a DC power supply branch 120 comprises a DC branch power supply 122, which provides at its output (right terminal in fig. 3) a DC voltage, namely its nominal DC output voltage. Furthermore, the DC power supply branch 120 comprises a diode 124 and a switch 126 arranged in series relative to said diode 124. Thus, the DC branch power supply 122 is connected to the common output terminal 130 of said power supply unit 100 (figure 2) by means of said diode 124 and said switch 126. This topology advantageously enables to selectively couple the output of the DC branch power supply 122 to the common output terminal 130 and thus to provide the output voltage of the DC branch power supply 122 to the common output terminal 130. The operation of the switch 126 may e.g. be controlled by the control means 110 depicted by figure 2.

The diode 124 ensures that no reverse currents occur from the common output terminal 130 back to any of the DC power supply branches 120, 120a, 120b, 120c, 120d, which would be the case if different power supply branches 120a, 120b comprise DC branch power supplies having different nominal output voltages.

By providing the basic structure according to figure 2 for the branches 120a, 120b, .. of figure 3, the power supply unit 100 according to an embodiment may advantageously vary its output voltage Vout at the common output terminal 130 by respectively controlling the switches 126 of the specific DC power supply branches 120b, 120c, 120d. The first DC power supply branch 120a of the PSU 100 of figure 2 does not comprise a switch 126 (figure 3), but is directly and statically connected to the common output terminal 130 via its associated diode.

Hence, whenever the output voltage Vout of the PSU 100 at the common output terminal 130 is desired to be equal to the output voltage of the DC power supply 122a of the branch 120a, the switches of the further DC power supply branches 120b, 120c, 120d are opened so as not to connect the branch power supplies 122b, 122c, 122d of the branches 120b, 120c, 120d to the common output terminal 130. This configuration is depicted by figure 2.

If another output voltage Vout at the common output terminal 130 is desired, for instance one or more of the branches 120b, 120c, 120d are connected to the common output terminal 130 by closing the respective switch 126, which may also be achieved under control of the control means 110, more specifically by means of a respective switch control section 110a implemented in the control means 110, the switch control section 110a providing respective control signals to the switches 126 via the switch control bus 111a.

According to a particularly preferred embodiment, the control means 110 are configured to receive information on an operational state of said load 200, e.g. RF amplifier, and to control the output voltage Vout of said PSU 100 depending on said operational state of said load 200, which enables to provide a PSU 100 with an increased level of energy efficiency. For instance, depending on the supply voltage which is actually required by the load 200, the PSU 100 according to the embodiments may advantageously close one or more of the switches 126 of one or more of its branches 120b, 120c, 120d so as to employ the respective DC branch power supplies 122b, 122c, 122d comprised within the specific branches.

Again, if one or more of the branches 120b, 120c, 120d are not required for a current supply of the load 200, they may be disconnected from the common output terminal 130 thus not contributing to the power supply of the load 200.

According to a further preferred embodiment, a sleep mode control unit 110b of control means 110 is provided which is configured to shift one or more of said DC branch power supplies 122a, 122b, 122c, 122d of the branches 120a, 120b, 120c, 120d to a sleep mode and/or an idle mode in which the branch power supply has a reduced energy consumption as compared to a regular operation. Thus, in addition to disconnecting a specific DC power supply 122 from the common output terminal 130, the DC branch power supply may also be set to an idle and/or a sleep mode which leads to a further increase of energy efficiency of the PSU 100. Sleep mode control signals are forwarded from unit 110b to the DC branch power supplies 122a, 122b, 122c, 122d via the sleep mode control bus 112a.

The low pass filter 140 connected between the common output terminal 130 of the PSU 100 and the input terminal of the load 200 may optionally be provided to smoothen the DC output voltage delivered to the load 200 in a per se known manner.

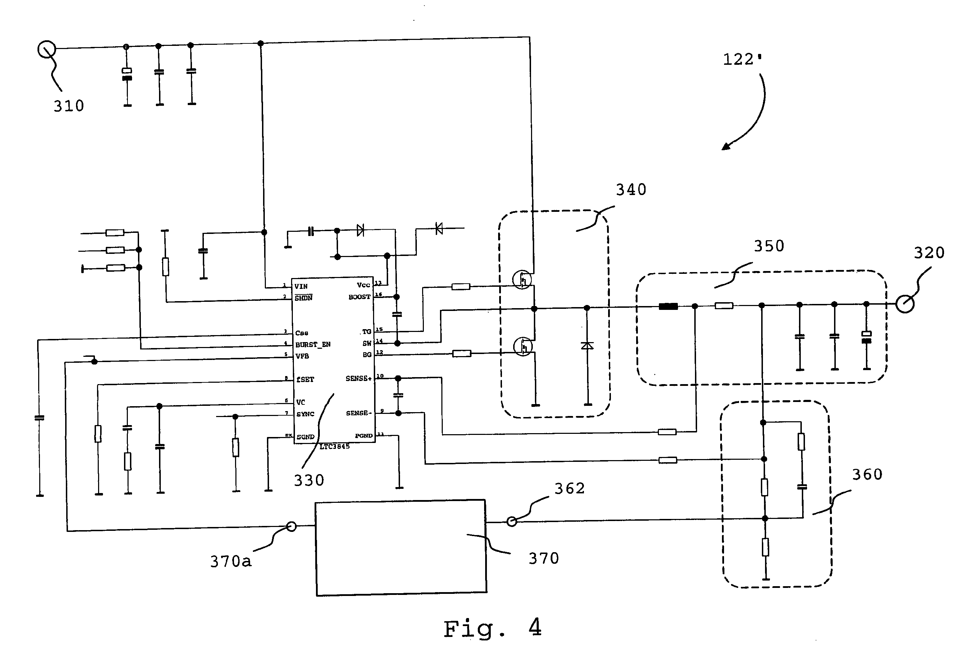

Figure 4 depicts a detailed schematic of a DC-to-DC converter circuit arrangement 122' which may be used by a DC branch power supply 122 for the PSU 100 according to an embodiment. As can be gathered from figure 4, the operation of the DC-to-DC converter 122' is controlled by an integrated circuit 330, which may e.g. be an LTC 3845-type integrated circuit manufactured by Linear Technology (www.linear.com).

Electrical energy is supplied to the DC-to-DC converter 122' as its input terminal 310 from a common electric supply bar that is not depicted within the figures. For instance, a common input voltage of 45 V may be employed for the PSU 100 to supply its DC-to-DC converters 122'.

An output terminal of the DC-to-DC converter 122' is designated in figure 4 by the reference number 320. As per se known, circuitry 340 comprises a switching stage including two semi-conductor switches which are controlled by the integrated circuit 330. After the switching stage 340, a series inductive element and filter circuitry is denoted by the reference sign 350. A voltage divider arrangement 360 divides an output voltage of the DC-to-DC converter 122' for returning a divided output voltage via a feedback path 362 to a respective control input 370a of the control integrated circuit 330. For instance, if the integrated circuit 330 is of the LTC 3845-type, the feedback path 362 may directly be connected to pin 5 ("VFB") of the integrated circuit 330. In this case, a per se known operation of the IC 330 within the DC-to-DC converter 122' is enabled.

However, according to an advantageous embodiment, the voltage divided by the voltage divider 360 and carried by the feedback path 362 may also not directly be feedback to the control circuit 330, but rather be influenced by the tuning circuit 370 which at an output 370a outputs a modified feedback signal to the control input (pin 5, "VFB" of LTC 3845) of the integrated circuit 330.

By influencing the divided voltage of the feedback path 362 via the voltage feedback tuning circuit 370, it is possible to tune the DC output voltage of the DC-to-DC converter 122' which, in addition to the variation of the DC output voltage at common output terminal 130 by operating the switches 126 as explained above, enables further degrees of freedom for adjusting the output voltage of the PSU 100. For instance, one or more of the DC branch power supplies 122a, 122b, 122c, 122d of the PSU 100 (figure 2) may be equipped with a tuning circuit 370 as depicted by figure 4 so as to enable additional tuning of the respective output voltages.

However, it is also possible to provide only one or few of an overall amount of branches 120a, 120b, 120c, 120d of the PSU 100 with respective tuning circuits 370, e.g. for such cases in which fine tuning of an output voltage is only desired for a specific nominal output voltage of a specific DC branch power supply 122a, 122b, 122c, 122d.

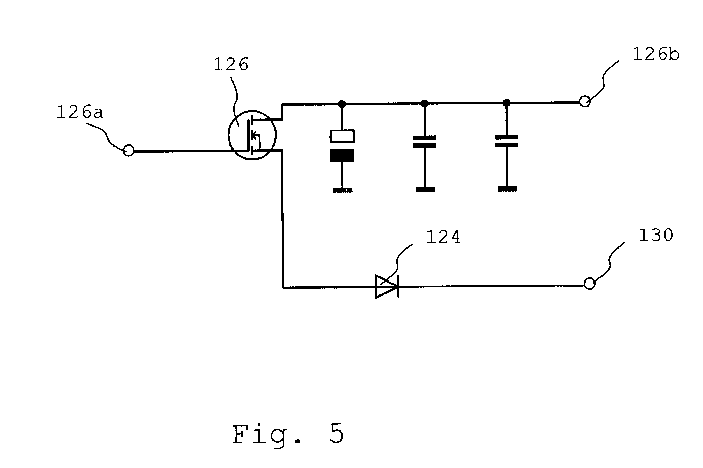

Figure 5 depicts components 124, 126 of a DC power supply branch 120 (figure 3), wherein said switch 126 is configured as an N-channel type MOSFET (metal oxide semiconductor field effect transistor). Additional filter capacitors are also provided. The control terminal 126a of switch 126 is e.g. connected to the switch control section 110a of control unit 110, whereas the input terminal 126b of switch 126 is connected to an output of the DC branch power supply 122 (figure 3), and the output of the diode 124 is connected to the common output terminal 130 of the PSU 100 (figure 2).

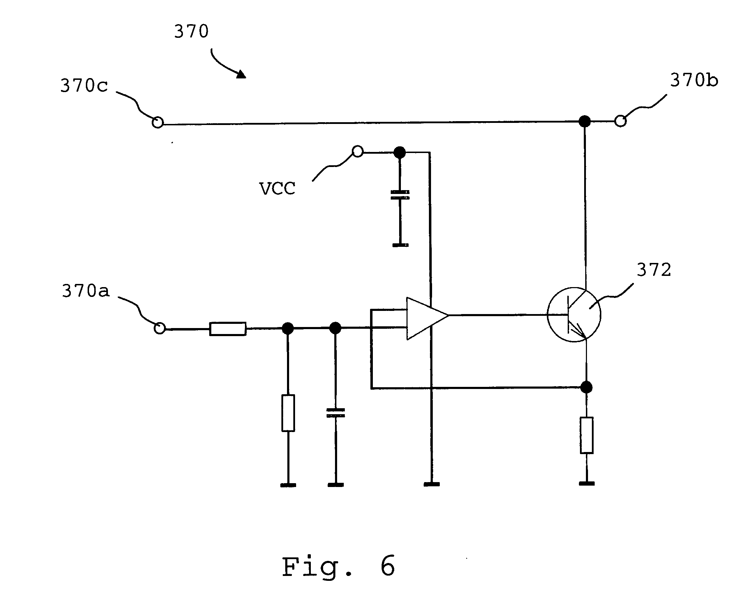

Figure 6 shows a detailed schematic of a tuning circuit 370 according to an embodiment, also cf. figure 4.

At its control input terminal 370a, the tuning circuit 370 receives a control signal, which may be forwarded by the voltage fine tuning control section 110c of the control means 110 (figure 2) via the respective control bus 111c.

The voltage tuning circuit 370 also comprises a current source 372 which can be controlled depending on the input signal delivered to control input terminal 370a thus drawing a defined amount of electric current from the feedback line terminal 370b via which the voltage tuning circuit 370 is connected to the feedback line 362 (figure 4) .

This way, under control of the control section 111c, the voltage tuning circuit 370 can influence the current that is drawn on the feedback line 362 from the voltage divider arrangement 360 (cf. figure 4) thus forwarding an influenced feedback signal at its output terminal 370c which is forwarded to control IC 330 (figure 4). This way, by influencing the feedback signal of feedback line 362, the voltage tuning circuit 370 can, in the above already explained manner, influence the DC output voltage provided by the DC-to-DC converter 122' for fine tuning purposes.

According to a particularly preferred embodiment, DC-to-DC converters 122' used within the DC branch power supplies 122 are of the buck-converter type for efficiently regulating different output voltages of the respective DC power supply branches 120a, ..., 120d of the PSU 100. By using semiconductor switches 126, the different branches 120a, ..., 120d may be connected/disconnected to/from the common output terminal 130 with very high switching frequencies so as to supply the load 200 with a varying DC output voltage Vout.

According to further embodiment, the control bus 111c may be designed as an IIC-type communications bus, wherein the voltage tuning control section 110c forwards respective ICC commands to an ICC-transponder (not shown) delivering a respective control input signal to the control input terminal 370a of the voltage tuning circuit 370 (figure 6).

According to further embodiment, by controlling the output voltage Vout of the PSU 100 depending on an operational state of the load 200, a particularly high degree of energy efficiency may be achieved, because only those branches 120a, .., 120d of the PSU 100 are required to be activated which supply the respective output voltage level to the common output terminal 130. The other branches may be deactivated (e.g. disconnected via switches 126 or even shifted to an idle mode or to a sleep mode as explained above).

For instance, when employing the inventive PSU 100 in an RF amplifier system 1000 as depicted by figure 1, an input signal to the PSU 100 according to an embodiment may be provided by a base station controller (BSC) or a radio network controller (RNC) which is associated with the RF amplifier system 1000 and which comprises knowledge on the operational state of the RF amplifier 200 thus enabling to notify the PSU 100 according to the embodiments of the operational state of the load 200. In this case, the PSU 100 can advantageously be controlled depending on the operational state of the load 200 with the effect of increased energy efficiency.

The number of DC supply branches 120a, ..., 120d is not limited to four, as exemplarily depicted by figure 2. It rather can vary between two and a maximum number only depending on the desired granularity of possible DC output voltages suppliable by the PSU 100.

For instance, with four branches, a first branch 120a (figure 2) may be designed so as to supply an output voltage of 15 V, whereas the second branch 120b may comprise a DC branch power supply 122b having a nominal output voltage of 20 V. The third branch 120c may be configured to supply a voltage of 25 V, and the fourth branch 120d may be configured to supply a voltage of 30 V.

By employing the fine tuning circuit 370 depicted by figure 6, a fine tuning of about 0 V to 4 V around the nominal output voltage (e.g., 15 V, 20 V, 25 V, 30 V) of the respective DC-to-DC converters 122*'* may be achieved.

The DC power supply branches 120 need not necessarily be equipped with DC-to-DC converters but may rather also employ AC-to-DC converters or other sources of DC output voltage.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the Figures, including any functional blocks labelled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. Electrical power supply unit, PSU, (100) for supplying a load (200) with a variable direct current, DC, voltage, wherein said PSU (100) comprises at least two DC power supply branches (120, 120a, 120b, ..), wherein each of said DC power supply branches (120, 120a, 120b, ..) comprises a DC branch power supply (122) and a diode (124) connecting said DC branch power supply (122) to an output terminal (130) of said PSU (100), wherein at least one of said DC power supply branches (120b, 120c, ..) further comprises a switch (126) that is connected in series to said diode (124) for selectively connecting the DC branch power supply (122) of said at least one DC power supply branch (120b, 120c, ..) with said output terminal (130).

2. Electrical power supply unit (100) according to claim 1, wherein the DC branch power supplies (122a, 122b, ..) of at least two power supply branches (120a, 120b, ..) comprise different nominal output voltages.

3. Electrical power supply unit (100) according to one of the preceding claims, wherein at least one DC branch power supply (122) comprises a DC-to-DC converter (122*'*).

4. Electrical power supply unit (100) according to claim 3, wherein said DC-to-DC converter (122*'*) comprises a tuning circuit (370) for tuning an output voltage of said DC-to-DC converter (122*'*) by influencing an electric potential of a feedback line (362) of said DC-to-DC converter (122*'*).

5. Electrical power supply unit (100) according to one of the preceding claims, wherein at least one switch (126) is a semiconductor switch.

6. Electrical power supply unit (100) according to one of the preceding claims, wherein said PSU (100) comprises control means (110) configured to control an operation of said PSU (100), particularly a state of said at least one switch (126) depending on a desired output voltage of said PSU (100).

7. Electrical power supply unit (100) according to claim 6, wherein said control means (110) are configured to shift at least one branch power supply (122) to an idle mode and/or a sleep mode in which the branch power supply (122) has a reduced energy consumption as compared to a regular operation.

8. Electrical power supply unit (100) according to one of the claims 6 to 7, wherein said control means (110) are configured to tune an output voltage of at least one branch power supply (122).

9. Electrical power supply unit (100) according to one of the claims 6 to 8, wherein said control means (110) are configured to receive information on an operational state of said load (200) and to control an output voltage (Vout) of said PSU (100) depending on said operational state of said load (200).

10. Radio frequency, RF, amplifier system (1000) comprising at least one RF amplifier (200) and at least one PSU (100) according to one of the preceding claims for supplying the at least one RF amplifier (200) with a variable DC voltage.

11. Method of operating an electrical power supply unit, PSU, (100) for supplying a load (200) with a variable direct current, DC, voltage, wherein said PSU (100) comprises at least two DC power supply branches (120a, 120b, ..), wherein each of said DC power supply branches (120a, 120b, ..) comprises a DC branch power supply (122) and a diode (124) connecting said DC branch power supply (122) to an output terminal (130) of said PSU (100), wherein at least one of said DC branch power supplies (122) is selectively connected with said output terminal (130) by means of a switch (126) that is connected in series to said diode (124).

12. Method according to claim 11, wherein at least one DC branch power supply (122) comprises a DC-to-DC converter (122*'*) and wherein an output voltage of said DC-to-DC converter (122*'*) is tuned by influencing an electric potential of a feedback line (362) of said DC-to-DC converter (122*'*).

13. Method according to one of the claims 11 to 12, wherein said PSU (100) comprises control means (110) configured to control an operation of said PSU (100), said control means (110) controlling a state of said at least one switch (126) depending on a desired output voltage of said PSU (100).

14. Method according to one of the claims 11 to 13, wherein said control means (110) shift at least one branch power supply (122a, 122b, ..) to an idle mode and/or a sleep mode in which the branch power supply (122a, 122b, ..) has a reduced energy consumption as compared to a regular operation.

15. Method according to one of the claims 11 to 14, wherein said control means (110) receive information on an operational state of said load (200) and control an output voltage (Vout) of said PSU (100) depending on said operational state of said load (200).
